Europäisches Patentamt

European Patent Office  (11) Publication number: **0 022 217**

Office européen des brevets  **B1**

(12)  **EUROPEAN PATENT SPECIFICATION**

(45) Date of publication of patent specification: 20.03.85  (51) Int. Cl.⁴: **G 02 F 1/133**, G 02 F 1/137

(21) Application number: 80103591.6

(22) Date of filing: 25.06.80

(54) Liquid crystal display device.

(30) Priority: 29.06.79 JP 90482/79

(43) Date of publication of application:
14.01.81 Bulletin 81/02

(45) Publication of the grant of the patent:
20.03.85 Bulletin 85/12

(84) Designated Contracting States:
CH DE FR GB IT LI NL

(56) References cited:
JP-A-53 101 296
US-A-4 099 855

XEROX DISCLOSURE JOURNAL, vol. 1, no. 6,
June 1976 STAMFORD, Conn. (US) G.A. DIR:
"Variable neutral density device" pages 79-80

(73) Proprietor: Stanley Electric Co., Ltd.
2-9-13, Nakameguro
Meguro-ku Tokyo (JP)

(72) Inventor: Kasahara, Takao
207-4, Akutsu Takatsu-ku
Kawasaki-shi Kanagawa-ken (JP)
Inventor: Ariga, Kazuo
2-2-2-113, Shimoochiai
Shinjuku-ku Tokyo-to (JP)

(74) Representative: Goddar, Heinz J., Dr. et al
FORRESTER & BOEHMERT Widenmayerstrasse
4/I
D-8000 München 22 (DE)

Courier Press, Leamington Spa, England.

## Description

The present invention relates to a liquid crystal display device capable of presenting various kinds of display by using a plurality of stacked TN type liquid crystal cells wherein the in-plane projections of the orientations of the liquid crystal molecules at adjacent planes of adjacent liquid crystal cells are parallel.

Such a liquid crystal display device is disclosed in US—A—4 099 855. In order to avoid the generation of interference fringes by double refraction of the light beam passing the liquid crystal cell the liquid crystal molecules are rendered optically continuous by aligning the direction of orientation of liquid crystal molecules at adjacent walls of liquid crystal cells.

However, although the orienting direction of the glass base and the major axis of the nearby liquid crystal molecules are made parallel to each other at the interface of the glass base and the liquid crystal, the liquid crystal molecules cannot be kept precisely parallel, but are slightly tilted with respect to the orienting direction of the glass base. Therefore the orientations of the liquid crystal molecules at the said adjacent planes are not in complete three-dimensionally parallel alignment.

This imperfect alignment in the vicinity of adjacent planes results in interference fringes because the plurality of stacked TN type liquid crystal cells are not optically perfectly continuous at the interfaces between two adjacent cells.

Therefore the object of the present invention is to provide a liquid crystal display device, using a plurality of stacked liquid crystal cells, in which device disturbances due to interference fringes are avoided.

According to the invention this object is achieved by providing that the orienting directions of the adjacent glass base surfaces of adjacent liquid crystal cells are made opposite, so that the orientations of the liquid crystal molecules at the said adjacent planes are in complete three-dimensionally parallel alignment.

In the following the invention is described with reference to the accompanying drawings.

Fig. 1 is a sectional side view of a known liquid crystal display device and

Fig. 2 (A) and 2 (B) are both fragmentary views illustrating the relation of the orienting directions of a glass base and the liquid crystal molecular orientations of TN type liquid crystal cells wherein Fig. 2 (A) is in accordance with the present invention.

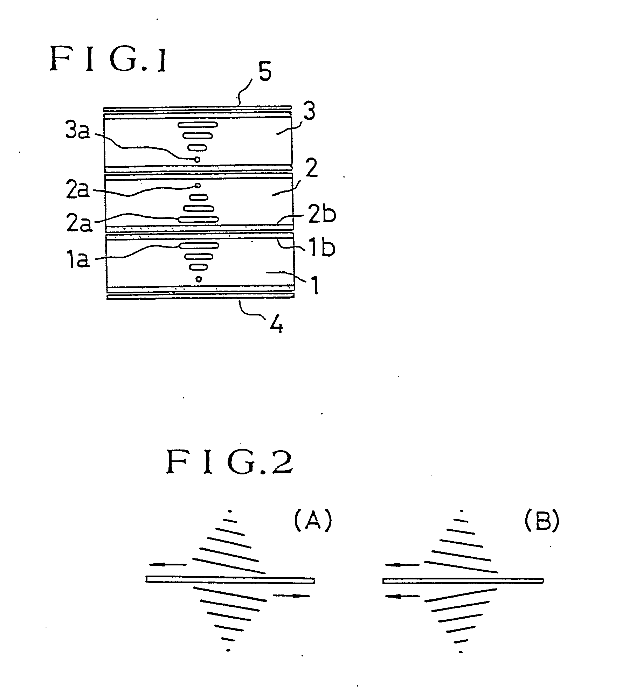

Fig. 1 shows a liquid crystal device with three TN type liquid crystal cells being stacked on top of each other. They are so combined that the orientation of the liquid crystal molecules in adjacent liquid crystal cells is continuous. At the boundary between a first liquid crystal cell 1 and a second liquid crystal cell 2, a lowermost liquid crystal molecule 2a of the second liquid cell 2 and an uppermost liquid crystal molecule 1a of the first liquid crystal cell 1 are aligned so that their major axes are parallel to each other. In a similar manner, a lowermost liquid crystal molecule 3a of a third crystal cell 3 and an uppermost liquid crystal molecule 2a' of the second liquid crystal cell 2 are aligned so that their major axes are parallel to each other. In this case, the orienting direction of a glass base 1b above the liquid crystal cell 1 and the orienting direction of a glass base 2b below the liquid crystal cell 2 are opposite to each other. The glass bases align the orientation of the liquid crystal molecules. However, although the orienting direction of a glass base and the major axes of the nearby liquid crystal molecules are made parallel to each other at the interface of the glass base and the liquid crystal, the liquid crystal molecules cannot be kept precisely parallel, but are slightly separated from the orienting direction of the glass base. Due to this, when the orienting directions of the glass bases are made to be in the same direction when combining two liquid crystal cells, the liquid crystal molecules to be made parallel to each other as shown in Fig. 2 (B) are consequently not parallel. In order to make them parallel, the orienting directions of the glass bases must be made opposite (Fig. 2 (A)) as described above. For this reason, the orienting directions of the glass bases are made opposite between · the liquid crystal cells 2 and 3. This means that the orientation of the liquid crystal molecules of the adjacent liquid crystal cells are in vector alignment. Numerals 4 and 5 in Fig. 1 denote polarizing plates.

According to this invention the orientation of the liquid crystal molecules is made three-dimensionally continuous in all of the liquid crystal cells, so that no errors in double refraction are generated and the generation of interference fringes is prevented.

## Claim

1. A liquid crystal display device capable of presenting various kinds of displays by using a plurality of stacked TN type liquid crystal cells wherein the in-plane projections of the orientations of the liquid crystal molecules at adjacent planes of adjacent liquid crystal cells are parallel, characterized in that the orienting directions of the adjacent glass base surfaces of adjacent liquid crystal cells are made opposite, so that the orientations of the liquid crystal molecules at the said adjacent planes are in complete three-dimensionally parallel alignment.

## Patentanspruch

1. Flüssigkristallanzeige zur Darstellung verschiedener Anzeigen mittels mehrerer geschichteter Flüssigkristallzellen des Typs TN, wobei die Projektionen auf die Ebene der Orientierungen der Flüssigkristallmoleküle an benachbarten Ebenen benachbarter Flüssigkristallzellen parallel sind, dadurch gekennzeichnet, daß die Orientierungsrichtungen der aneinandergrenzenden Glasplättchenoberflächen benachbarter Flüssigkristallzellen einander entgegengesetzt ausgebildet sind, so daß die Orientierungen der Flüssigkristallmoleküle an den aneinander angrenzenden Ebenen vollständig dreidimensional parallel ausgereichtet sind.

**Revendication**

1. Dispositif d'affichage à cristal liquide susceptible de présenter différents types d'affichages en utilisant une pluralité de cellules de cristal liquide type TN, empilées, où les projections en plan des orientations des molécules de cristal liquide sur des plans adjacents de cellules de cristal liquide adjacentes sont parallèles, caractérisé par le fait que les directions d'orientation des surfaces de base en verre adjacentes des cellules de cristal liquide adjacentes sont rendues opposées de telle sorte que les orientations des molécules de cristal liquide sur lesdits plans adjacents sont en complet alignement parallèle tridimensionnellement.

# F I G. 1

# F I G.2

(A)                    (B)